(19) Europäisches Patentamt / European Patent Office / Office européen des brevets

(11) **EP 2 944 174 B1**

(12) **EUROPÄISCHE PATENTSCHRIFT**

(45) Veröffentlichungstag und Bekanntmachung des Hinweises auf die Patenterteilung:
**08.08.2018  Patentblatt 2018/32**

(51) Int Cl.:
*A01B 79/00* *(2006.01)*

(21) Anmeldenummer: **15401036.7**

(22) Anmeldetag: **05.05.2015**

(54) **ELEKTRONISCHES MASCHINEN-MANAGEMENT-SYSTEM**

ELECTRONIC MACHINE MANAGEMENT SYSTEM

SYSTÈME DE GESTION ÉLECTRONIQUE DE MACHINES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2014  DE 102014106774**

(43) Veröffentlichungstag der Anmeldung:
**18.11.2015  Patentblatt 2015/47**

(73) Patentinhaber: **Amazonen-Werke H. Dreyer GmbH & Co. KG**
**49205 Hasbergen (DE)**

(72) Erfinder:
• **Fröschle, Heike**
  **49124 Georgsmarienhütte (DE)**
• **Ströbel-Fröschle, Markus**
  **49124 Georgsmarienhütte (DE)**

(56) Entgegenhaltungen:
EP-A2- 1 692 928          EP-B1- 2 253 187
US-A1- 2009 037 058     US-B1- 8 412 419

**Beschreibung**

Die vorliegende Erfindung betrifft ein elektronisches Maschinen-Management-System zum Einleiten von Schalt- und/oder Stellvorgängen bei landwirtschaftlichen Arbeitsmaschinen sowie ein Verfahren zum Einleiten solcher Vorgänge.

Es ist aus dem Stand der Technik bekannt, bestimmte technische Merkmale der Arbeitsgeräte von landwirtschaftlichen Arbeitsmaschinen bei Einschaltvorgängen zu berücksichtigen. So ist es üblich, die ein Arbeitsgerät kurz vor dem geplanten eigentlichen Arbeitsbeginn einzuschalten, um die Totzeit, die beispielsweise beim Ausbringen von Saatgut aufgrund des Weges, den das Saatgut in dem Arbeitsgerät und in der Luft zurücklegt, bevor es auf den Boden auftrifft, zu berücksichtigen.

Ebenso ist beispielsweise aus der EP 1 692 928 A2 und der EP 2 253 187 B1 bekannt, in Abhängigkeit der aktuell gemessenen Geschwindigkeit der landwirtschaftlichen Arbeitsmaschine eine Änderung in der Grundgeschwindigkeit der Arbeitsmaschine vorauszuberechnen, um eine Verzögerung in der Verteilungsrate von beispielsweise abgegebenem Saatgut, zu vermindern.

Die bekannten Vorrichtungen und Verfahren erlauben jedoch nur eine begrenzte Berücksichtigung zur Verfügung stehender Informationen über den aktuellen Betrieb der landwirtschaftlichen Arbeitsmaschine, was die Fähigkeiten zur Vorausberechnung der Bewegung der Arbeitsmaschine erheblich einschränkt.

Ausgehend vom Stand der Technik ist es Aufgabe der vorliegenden Erfindung, ein elektronisches Maschinen-Management-System bereitzustellen, das eine höhere Qualität der Voraussage der Bewegung bzw. des Verhaltens der landwirtschaftlichen Arbeitsmaschine erlaubt und weiterhin die Betriebsbereitschaft des Arbeitsgeräts der landwirtschaftlichen Arbeitsmaschine noch zuverlässiger vor Eintritt des geplanten Ereignisses gewährleisten kann bzw. die rechtzeitige Abschaltung erlaubt.

Diese Aufgabe wird erfindungsgemäße durch das elektronische Maschinen-Management-System nach Anspruch 1 und das Verfahren zum Einleiten von Schalt- und/oder Stellvorgängen nach Anspruch 8 gelöst. Vorteilhafte Weiterbildungen der Erfindung sind in den Unteransprüchen erfasst.

Das erfindungsgemäße elektronische Maschinen-Management-System zum Einleiten von Schalt- und/oder Stellvorgängen bei landwirtschaftlichen Arbeitsmaschinen umfasst ein lernfähiges Überwachungsmodul, das Informationen von mehreren Arbeitszyklen der Arbeitsmaschine hinsichtlich des Fahrverhaltens eines Bedieners der landwirtschaftlichen Arbeitsmaschine erfasst und auswertet, und ein maschinenspezifisches Modul, das Komponenten der landwirtschaftlichen Arbeitsmaschine steuern kann, wobei das Überwachungsmodul in Abhängigkeit der ausgewerteten Informationen vor Eintreten eines geplanten Ereignisses ein für dieses Ereignis indikatives Signal an das maschinenspezifische Modul übertragen kann und wobei das maschinenspezifische Modul in Abhängigkeit von diesem Signal wenigstens eine der Komponenten in einen Stand-by-Zustand versetzen kann.

Dabei ist unter dem Begriff des Arbeitszyklus das Verhalten der Arbeitsmaschine bei der Ausführung eines bestimmten Arbeitsablaufs, wie dem Ausbringen von Saatgut, zu verstehen. Insbesondere umfasst jeder Arbeitszyklus nicht nur das eigentliche Ereignis, sondern auch zumindest einen gewissen Zeitraum vor Eintritt des Ereignisses. So fällt unter einen Arbeitszyklus auch die Bewegung der Arbeitsmaschine, beispielsweise zum Ort des geplanten Ereignisses hin (beispielsweise das Auffahren auf das Feld, bevor mit dem Aussäen begonnen wird). Ein Arbeitszyklus umfasst also einen Zeitraum, der das geplante Ereignis bzw. irgendein Ereignis beinhaltet, wobei sich der Zeitraum jedoch auch über einen Zeitintervall vor dem Ereignis und gegebenenfalls auch nach dem Ereignis erstreckt. Dabei muss der Arbeitszyklus nicht notwendigerweise dasselbe oder ein ähnliches Ereignis, wie das geplante Ereignis beinhalten.

Der Stand-by-Zustand der Komponente bezieht sich bezieht sich dabei auf einen Zustand der Komponente, in welchem entweder die Arbeitsbereitschaft durch Einschalten der Stromzufuhr, Pumpen oder Ausrichtung von Ausbringorganen hergestellt wird, oder die Komponente aus einem Arbeitsgang (Ausbringen von Material oder ähnliches) in einen nicht arbeitenden Zustand versetzt wird, indem beispielsweise das Ausbringen von Material beendet wird, die Komponente jedoch vorzugsweise nicht vollständig abgeschaltet wird.

Dieses elektronische Maschinen-Management-System bietet den Vorteil, dass nicht nur die aktuellen Betriebsbedingungen der landwirtschaftlichen Arbeitsmaschine, wie Ort, Geschwindigkeit und Beschleunigung, berücksichtigt werden können, sondern im Hinblick auf das geplante Ereignis, auch Informationen darüber, wie vergleichbare Arbeitszyklen für gewöhnlich vom Bediener durchgeführt werden, berücksichtigt werden können, um eine bessere Voraussage über den tatsächlichen Eintritt des planten Ereignisses zu liefern und in Abhängigkeit dieser Voraussage die Arbeitsbereitschaft der Komponente der landwirtschaftlichen Arbeitsmaschine herzustellen.

In einer Ausführungsform ist das System dadurch gekennzeichnet, dass das System weiterhin ein geographisches Modul umfasst, das geographische Informationen über den Ort der landwirtschaftlichen Arbeitsmaschine in Echtzeit ermitteln kann und ein für die geographischen Informationen indikatives Signal an das Überwachungsmodul übertragen kann, wobei das Überwachungsmodul geeignet ist, die geographischen Informationen beim Auswerten der Informationen hinsichtlich des Fahrverhaltens zu verwenden. So kann den einzelnen Arbeitszyklen auch der Aufenthaltsort während dieser Arbeitszyklen auf dem Feld zugeordnet werden sowie ein bestimmtes Bewegungsprofil. Weiterhin kann so in vorteilhafter Weise die ausgewertete Information über die Arbeitszyklen mit den aktuellen Bewegungsparametern der landwirtschaftlichen Arbeitsmaschine kombiniert werden.

Es kann vorgesehen sein, dass das Überwachungsmodul ein neuronales Netz umfasst. Durch die Verwendung eines neuronalen Netzes kann die Lernfähigkeit des elektronischen Maschinenmanagementsystems gesteigert werden, was die Fähigkeit zur Voraussage bezüglich des Eintretens des geplanten Ereignisses verbessern kann.

Weiterhin kann das Überwachungsmodul einen Speicher umfassen, in dem das Fahrverhalten eines Bedieners einer Vielzahl von Arbeitszyklen der Arbeitsmaschine gespeichert werden kann. In dieser Ausführungsform wird sichergestellt, dass möglichst viele Informationen über vergangene Arbeitszyklen bereitstehen, die für die Auswertung genutzt werden können, was die Genauigkeit der Vorhersage weiter erhöhen kann.

Gemäß einer Ausführungsform kann das Überwachungsmodul Arbeitszyklen in verschiedene Kategorien einordnen. Die Kategorisierung erlaubt eine Zusammenfassung von für einen bestimmten Arbeitszyklus bzw. ein bestimmtes geplantes Ereignis relevanter Informationen.

In einer Weiterbildung dieser Ausführungsform werden für einen Arbeitszyklus aus einer der Kategorien nur Informationen von Arbeitszyklen aus derselben Kategorie oder Informationen aus wenigstens einer weiteren Kategorie ausgewertet. Werden nur Informationen aus derselben Kategorie (beispielsweise Ausbringen von Saatgut) berücksichtigt, so wird sichergestellt, dass bei der Vorausberechnung eine Berücksichtigung tatsächlich relevanter Abläufe stattfindet. Die Berücksichtigung von Arbeitszyklen aus anderen Kategorien kann jedoch helfen, das generelle Fahrverhalten des Bedieners der landwirtschaftlichen Arbeitsmaschine genauer zu erfassen, was die grundlegende Aussagekraft der Vorhersage bezüglich des Eintritts des geplanten Ereignisses verbessern kann.

Es ist vorteilhaft, wenn das System in Abhängigkeit von gewichteten Informationen über den aktuellen Betriebszustand und den ausgewerteten Informationen das für das Ereignis indikative Signal an das maschinenspezifische Modul übermitteln kann. Somit kann das Fahrverhalten des Bedieners zu einem gegenwärtigen Zeitpunkt vor Eintritt eines geplanten Ereignisses entweder mehr Gewicht gegenüber den ausgewerteten Informationen von vorangegangenen Arbeitszyklen gewinnen oder weniger stark in die Berechnung einfließen. Ebenso ist es möglich, weiter zurückliegende Arbeitszyklus mit weniger Gewicht in die Berechnung einfließen zu lassen als vor kurzem durchgeführte Arbeitszyklen.

Das erfindungsgemäße Verfahren zum Einleiten von Schalt- und/oder Stellvorgängen bei landwirtschaftlichen Arbeitsmaschinen beinhaltet, dass Informationen von mehreren Arbeitszyklen einer Arbeitsmaschine hinsichtlich des Fahrverhaltens eines Bedieners erfasst und ausgewertet werden und in Abhängigkeit der ausgewerteten Informationen vor Eintritt eines geplanten Ereignisses ein für dieses Ereignis indikatives Signal an ein maschinenspezifisches Modul übermittelt wird, das in Abhängigkeit dieses Signals wenigstens eine der Komponenten der Arbeitsmaschine in einen Stand-by-Zustand versetzt. Dieses Verfahren verbessert die Aussagekraft und Genauigkeit der Vorausberechnungen bezüglich des Zeitpunkts, wann das geplante Ereignis eintritt.

In einer Weiterbildung dieses Verfahrens haben die Arbeitszyklen ein ähnliches geplantes Ereignis beinhaltet. Somit können Informationen, die relevant für das aktuelle geplante Ereignis sind, aus den vorherigen Arbeitszyklen abgeleitet werden.

In einer Ausführungsform umfassen die Informationen hinsichtlich des Fahrverhaltens wenigstens die Geschwindigkeit der Arbeitsmaschine zu verschiedenen Zeitpunkten und die Beschleunigung der Arbeitsmaschine zu verschiedenen Zeitpunkten. Diese Ausführungsform erlaubt eine Vorhersage des Eintritts des geplanten Ereignisses, beispielsweise durch Bestimmung von Durchschnittsgeschwindigkeiten, die der Bediener beim Fahren über das Feld vorgibt.

In einer vorteilhaften Weiterbildung dieser Ausführungsform ist das Verfahren dadurch gekennzeichnet, dass aus den ausgewerteten Informationen und Informationen über den aktuellen Arbeitszyklus ein wahrscheinlichstes Fahrverhalten abgeleitet wird und das indikative Signal in Abhängigkeit dieses wahrscheinlichsten Fahrverhaltens ein Zeitintervall vor Eintreten des geplanten Ereignisses übermittelt wird. Da nicht nur die aktuellen Parameter der Bewegung der landwirtschaftlichen Arbeitsmaschine zur Berechnung dieses Zeitintervalls verwendet werden sondern auch die zurückliegenden Arbeitszyklen, ist die Aussagekraft der Berechnung des wahrscheinlichsten Fahrverhaltens deutlich erhöht.

Es kann ferner vorgesehen sein, dass die Arbeitszyklen in verschiedene Kategorien eingeteilt werden. Diese Einteilung kann zum einen die Geschwindigkeit, mit der die Berechnung durchgeführt werden kann, erhöhen und erlaubt eine deutlich strukturiertere Berechnung.

In einer Weiterbildung davon wird jedes geplante Ereignis in eine der Kategorien eingeordnet und Informationen nur aus dieser Kategorie ausgewertet oder Informationen aus dieser Kategorie und wenigstens einer weiteren Kategorie ausgewertet. Während die Verwendung von Informationen über Arbeitszyklen aus derselben Kategorie die Berücksichtigung von für ein bestimmtes geplantes Ereignis eventuell nicht relevanter Informationen unterdrückt, erlaubt die Berücksichtigung von Informationen über Arbeitszyklen aus zwei oder mehreren Kategorien eine verbesserte Aussage über das grundlegende Fahrverhalten des Bedieners.

Vorteilhaft kann bei der Auswertung der Informationen eine Gewichtung der Informationen in Abhängigkeit von der Zeit erfolgen. Durch diese Ausführungsform können sowohl das aktuelle Fahrverhalten als auch weniger lang zurückliegende Arbeitszyklen mit einer höheren Gewichtung in die Berechnung des Fahrverhaltens eingehen als weiter zurückliegende Arbeitszyklen, womit Veränderungen im Fahrverhalten des Bedieners besser berücksichtigt werden können.

Hierbei zeigen die Zeichnungen:

Fig. 1 Schematische Darstellung einer landwirtschaftlichen Arbeitsmaschine bei der Bewegung auf einem Feld gemäß einer Ausführungsform.

Fig. 2 Schematische Darstellung des erfindungsgemäßen Verfahrens gemäß einer Ausführungsform.

Fig. 3 Schematische Darstellung des erfindungsgemäßen Verfahrens gemäß einer weiteren Ausführungsform

Fig. 4 weitere schematische Darstellung des erfindungsgemäßen Verfahrens.

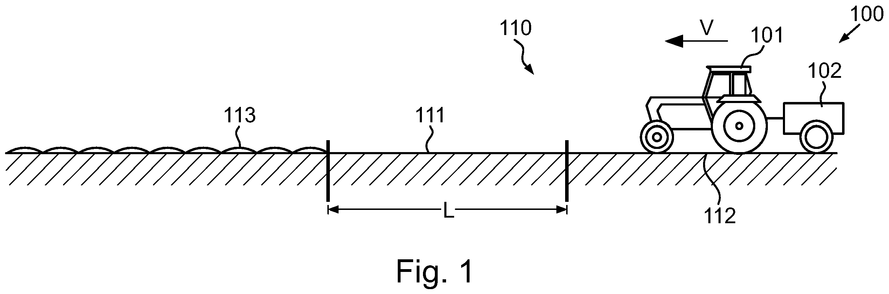

Die Fig. 1 zeigt eine landwirtschaftliche Arbeitsmaschine 100 auf einem Feld 110. Üblicherweise umfasst die landwirtschaftliche Arbeitsmaschine 100, kurz Arbeitsmaschine 100, ein Zugfahrzeug 101 und ein an diesem befestigtes bzw. mit diesem verbundenes Arbeitsgerät 102. Das Arbeitsgerät 102 kann beispielsweise eine Sämaschine, ein Düngerstreuer oder ähnliches Arbeitsgerät, das in der landwirtschaftlichen Industrie eingesetzt wird, sein. Das Arbeitsgerät 102 kann eine aber auch mehrere abhängig voneinander oder unabhängig voneinander ansteuerbare Komponenten umfassen. Erfindungsgemäß ist vorgesehen, dass beim Fahren der Arbeitsmaschine 100 über das Feld 110 mit Hilfe eines maschinenspezifischen Moduls die Funktionen des Arbeitsgeräts gesteuert werden. Insbesondere ist vorgesehen, dass das maschinenspezifische Modul das Arbeitsgerät 102 in einen Stand-by-Zustand, beispielsweise aus dem Ruhezustand heraus, versetzen kann, wobei im Stand-by-Zustand alle für die Arbeitsbereitschaft des Arbeitsgeräts 102 notwendigen Betriebsparameter eingestellt werden. Darunter fällt beispielsweise, dass die Ausbringkomponenten in ihre Arbeitsstellung gebracht werden, Pumpen eingeschaltet werden und die generelle Stromversorgung des Arbeitsgeräts 102 hergestellt wird.

Es ist vorgesehen, dass nicht nur eine Herstellung der Arbeitsbereitschaft mit der erfindungsgemäßen Vorrichtung realisiert werden kann, sondern das Arbeitsgerät bzw. wenigstens eine Komponente des Arbeitsgeräts aus einem Betriebszustand wieder rechtzeitig in den Stand-by-Zustand zurückgeführt, also der Betrieb teilweise eingestellt wird, wobei vorzugsweise eine gewisse Arbeitsbereitschaft durch Aufrechterhaltung der Stromversorgung o.ä. gegeben ist. Um die Beschreibung der Erfindung zu vereinfachen, wird im Folgenden Bezug auf den "Beginn" eines Arbeitsvorgangs, wie das Ausbringen von Saatgut oder Dünger Bezug genommen. Es versteht sich jedoch, dass auch die Beendigung eines Arbeitsvorgangs als geplantes Ereignis verstanden und die Erfindung zur Steuerung der Schaltvorgänge dazu verwendet werden kann.

Erfindungsgemäß wird der Stand-by-Zustand eine Zeit vor Erreichen des eigentlich zu bearbeitenden Bereits 113 des Feldes 110 initiiert, um sicherzustellen, dass die Arbeitsbereitschaft des Arbeitsgeräts 102 bei Erreichen dieses Bereichs 113 vollständig hergestellt ist und somit direkt mit dem Bearbeiten des Bereichs 113 begonnen werden kann.

Erfindungsgemäß ist dazu vorgesehen, dass ein in Fig. 1 nicht dargestelltes Überwachungsmodul, das entweder am Zugfahrzeug 101 und/oder am Arbeitsgerät 102 angeordnet und mit dem maschinenspezifischen Modul zumindest derart verbunden ist, dass ein Datenaustausch stattfinden kann, Informationen über das Fahrverhalten des Bedieners der Arbeitsmaschine 100 erfasst und auswertet und anhand dessen ermittelt, zu welcher Zeit ein Signal vom Überwachungsmodul an das maschinenspezifische Modul gesendet werden muss, aufgrund dessen das maschinenspezifische Modul das Arbeitsgerät bzw. wenigstens eine Komponente des Arbeitsgeräts in den Stand-by-Zustand schaltet. Zu diesem Zweck erfasst das Überwachungsmodul vorzugsweise fortlaufend Informationen über den aktuellen Betriebszustand der Arbeitsmaschine 100, wie beispielsweise Geschwindigkeit, Beschleunigung, Position auf dem Feld, auch in Relation zum Bereich 113 und Ähnliches. Aus diesen Informationen kann eine Vorausberechnung hinsichtlich der noch zur Verfügung stehenden Zeit erfolgen, bis die Arbeitsmaschine 100 den zu bearbeitenden Bereich 113 erreicht. Aufgrund dieser Vorausberechnung kann dann der Zeitpunkt vor Erreichen des zu bearbeitenden Feldes ermittelt werden, zu dem das Signal an das maschinenspezifische Modul gesendet werden muss. Aufgrund der Tatsache, dass die Arbeitsmaschine 100 sich über das Feld in Richtung des Bereichs 113 bewegt, ergibt sich daraus, dass das Signal in einer Entfernung L in einem Bereich 111 an das maschinenspezifische Modul gesendet werden muss, um sicherzustellen, dass die Arbeitsbereitschaft rechtzeitig hergestellt werden kann.

Die Voraussage, wann die Arbeitsmaschine 100 tatsächlich den zu bearbeitenden Bereich 113 erreicht und in welcher Entfernung L zum zu bearbeitenden Bereich demnach das Signal an das maschinenspezifische Modul gesandt werden muss, ist aufgrund der Tatsache, dass der Bediener letztlich völlig selbständig die Bewegung der Arbeitsmaschine (Geschwindigkeit, Beschleunigung, Abbremsen, Lenkung) steuert, schwierig. Somit kann selbst bei genauer Messung der aktuellen Betriebsparameter der Arbeitsmaschine nicht gewährleistet werden, dass die Voraussagen, wann die Arbeitsmaschine bei dem geplanten Ereignis (in diesem Fall Auffahren auf den Bereich 113) angelangt, tatsächlich korrekt oder zumindest in einem akzeptablen Toleranzbereich genau ist.

Um die Aussagekraft der Voraussage zu verbessern, ist vorgesehen, dass das Überwachungsmodul nicht nur die aktuellen Informationen über das Fahrverhalten des Bedieners erfasst und auswertet, sondern darüber hinaus Informationen über bereits vorangegangene Arbeitszyklen berücksichtigt, um das Fahrverhalten der Arbeitsmaschine 100 vor Erreichen des Bereichs 113 noch genauer vorherzusagen. Dabei betreffen die vorangegangenen Arbeitszyklen nicht nur das Auftreten des im aktuellen Arbeitszyklus geplanten Ereignisses sondern betreffen ein Zeitintervall um ein geplantes Ereignis herum. Dabei ist zunächst nicht relevant, ob das geplante Ereignis der vorhergehenden Arbeitszyklen identisch oder ähnlich zu dem geplanten Ereignis des aktuellen Arbeitszyklus ist. Der Arbeitszyklus umfasst somit zumindest einen Zeitraum vor Eintritt der jeweils in dem Arbeitszyklus geplanten Ereignisse.

Als Beispiel für ein solches geplantes Ereignis kann das Auffahren der Arbeitsmaschine 100 auf einen Bereich eines Feldes angesehen werden, auf dem das Ausbringen von Saatgut begonnen werden soll. Dieser Arbeitsvorgang bzw. Arbeitszyklus wird vom Bediener der Arbeitsmaschine 100 mit großer Wahrscheinlichkeit nicht jedes Mal in absolut identischer Art und Weise erfolgen sondern wird leichten Schwankungen unterworfen sein, wobei jedoch zumindest Tendenzen, die mit dem Fahrverhalten des Bedieners zusammenhängen, über einen gewissen Zeitraum konstant bleiben können. So kann davon ausgegangen werden, dass ein Bediener über mehrere Arbeitszyklen hinweg mit einer für ihn als angenehm empfundenen Geschwindigkeit auf den Bereich zufährt, auf dem das Saatgut ausgebracht werden soll. Weiterhin kann er ein bestimmtes Beschleunigungs- oder Abbremsverhalten an den Tag legen, sofern er sich dem Bereich und damit dem geplanten Ereignis des Ausbringens des Saatguts, nähert. Die Berücksichtigung von Beschleunigungs- oder Abbremsvorgängen bei einer Voraussage über die noch zur Verfügung stehende Zeit bis zum Eintritt des geplanten Ereignisses, gestaltet sich aufgrund nur der aktuellen Betriebsparameter (Geschwindigkeit, aktuelle Beschleunigung usw.) schwierig, weshalb zu diesem Zweck die Informationen über bereits vergangene Arbeitszyklen, bei denen auch das Verhalten der Arbeitsmaschine bzw. das Fahrverhalten des Bedieners über das gesamte Zeitintervall aufgenommen wurde, Berücksichtigung finden. Somit kann aufgrund des Fahrverhaltens des Bedieners in den vorangegangenen Arbeitszyklen besser abgeschätzt werden, wie sich der Bediener bzw. sein Fahrverhalten im Bereich 111 vor dem zu bearbeitenden Bereich des Feldes 113 ändern wird. Aufgrund dieser Informationen und der aktuell zur Verfügung stehenden Betriebsdaten (Geschwindigkeit, Beschleunigung etc.) kann dann eine deutlich genauere Vorhersage darüber getroffen werden, wann die Arbeitsmaschine bzw. das Arbeitsgerät in dem Bereich 113 eintreffen wird.

Um die Voraussage auf Grundlage der vergangenen Arbeitszyklen zu optimieren, ist vorgesehen, dass das Überwachungsmodul lernfähig ausgebildet ist, so dass es anhand der über mehrere Arbeitszyklen hinweg gewonnenen Informationen, das Verhalten des Bedieners immer besser vorhersagen kann. Dazu kann vorgesehen sein, dass das Überwachungsmodul ein neuronales Netz umfasst, das mit Hilfe entsprechender, auf die gewonnenen Daten angewandter Algorithmen vorzugsweise auch lernen kann, gewisse Informationen, die für die Vorhersage über das Fahrverhalten des Bedieners eventuell nicht relevant oder besonders relevant sind, gesondert zu berücksichtigen oder überhaupt nicht in die Vorhersage eingehen zu lassen.

Da die Voraussagbarkeit des Fahrverhaltens maßgeblich von den Informationen über Geschwindigkeit, Beschleunigung und gegebenenfalls Ort der Arbeitsmaschine auf dem Feld abhängt, ist vorgesehen, dass das elektronische Management-System in einer Ausführungsform ein geografisches Modul umfasst, das zusätzlich geografische Informationen über den Ort der landwirtschaftlichen Arbeitsmaschine in Echtzeit ermitteln kann und diese Informationen an das Überwachungsmodul übertragen kann. Dies ist besonders vorteilhaft in einer Ausführungsform, in der das Überwachungsmodul Informationen aus vergangenen Arbeitszyklen unter Berücksichtigung der aktuellen Informationen anwendet, um das Fahrverhalten des Bedieners vorauszusagen. Beispielsweise können so auch Arbeitszyklen miteinander verglichen und für die Voraussage des Fahrverhaltens des Bedieners genutzt werden, die an unterschiedlichen Orten auf dem Feld stattfanden, jedoch ein gleiches oder ähnliches geplantes Ereignis zum Ziel hatten (beispielsweise das Ausbringen von Saatgut oder Dünger). Aus den vorangegangenen Arbeitszyklen kann das Überwachungsmodul grundsätzliche Informationen über das Fahrverhalten des Bedieners gewinnen und diese unter Berücksichtigung der aktuellen geografischen Informationen (Geschwindigkeit, Beschleunigung, Ort usw.) auf das aktuelle geplante Ereignis anwenden und so eine Voraussage über das Fahrverhalten auch an einem neuen Ort auf dem Feld sicherstellen.

Es ist besonders vorteilhaft, wenn das Überwachungsmodul auf Informationen zu möglichst vielen vorangegangenen Arbeitszyklen zugreifen kann, weshalb vorgesehen ist, dass das Überwachungsmodul einen Massenspeicher umfasst oder mit diesem verbunden ist, in dem Informationen über vorangegangene Arbeitszyklen abgespeichert sein können.

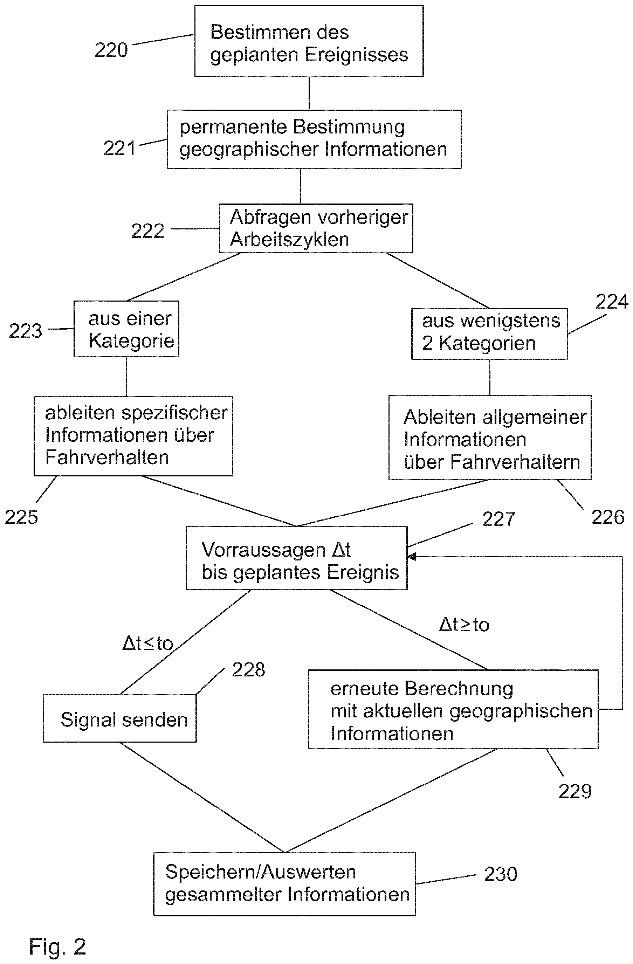

Um den Ablauf des Verfahrens zum Einleiten der Schalt- und/oder Stellvorgänge bzw. zum Aussenden des Signals an das maschinenspezifische Modul, dass die Komponente oder die Komponenten des Arbeitsgeräts in den Stand-by-Zustand versetzt werden sollen, zu veranschaulichen, zeigt Fig. 2 in einer schematischen Darstellung den zeitlichen Ablauf des Verfahrens.

Da eine Vorausberechnung der noch verbleibenden Zeit nur dann sinnvoll möglich ist, wenn dem Überwachungsmodul genug Informationen über das geplante Ereignis zur Verfügung stehen, wird in einem ersten Schritt 220 das geplante Ereignis bestimmt. Unter diese Bestimmung kann beispielsweise die Eingabe eines Bedieners auf eine Eingabeeinrichtung in der Arbeitsmaschine oder an einem Computer fallen, wobei Informationen hinsichtlich der Art des Ereignisses (Ausbringung von Saatgut, Pflügen, Düngen oder Ähnliches) eingegeben wird und zusätzliche Informationen darüber, wo dieses Ereignis stattfinden soll. Alternativ kann auf Grundlage von gesammelten Informationen und dem verwendeten Arbeitsgerät durch das Überwachungsmodul oder ein zusätzliches Modul auch automatisch festgelegt werden, an welchen Orten eine bestimmte Aktion des Arbeitsgeräts ausgeführt werden soll (beispielsweise wenden der Arbeitsmaschine am Feldrand) und anhand dessen das geplante Ereignis bestimmt werden.

Beginnt der Bediener der Arbeitsmaschine nun mit dem neuen Arbeitszyklus, der das in 220 bestimmte geplante Ereignis umfasst, so ist es für das Überwachungsmodul notwendig, Informationen über den aktuellen Betrieb der Arbeitsmaschine zu erhalten, wie beispielsweise Ort, Geschwindigkeit, Beschleunigung, Richtung oder Ähnliches. Dazu werden permanent, vorzugsweise in Echtzeit, geografische Informationen bestimmt 221. Vorzugsweise beginnt der Schritt 221 mit Aufnahme der Bewegung der Arbeitsmaschine, wie sie in Fig. 1 dargestellt ist. So kann eine permanente Überwachung der Bewegung der Arbeitsmaschine erfolgen und somit auch stets überprüft werden, wann, basierend auf den aktuellen Daten, das nächste geplante Ereignis voraussichtlich eintritt.

Da das geplante Ereignis bekannt ist, werden nun Informationen über vorangegangene Arbeitszyklen abgefragt 222, die für die Voraussage des Fahrverhaltens relevant sein könnten.

In diesem Zusammenhang kann vorgesehen sein, dass das Überwachungsmodul selbständig, beispielsweise aufgrund des bisher "Gelernten" aus vorgegebenen Kategorien zu Arbeitszyklen in Abhängigkeit des geplanten Ereignisses eine Kategorie auswählt 223, die ähnliche oder dieselben Ereignisse umfasst. Dabei bedeuten ähnliche Ereignisse, dass die zu diesen Ereignissen in der Vergangenheit durchgeführten Arbeitszyklen beispielsweise alle das Aussäen von Saatgut betreffen oder das Ausbringen von Dünger. Jedoch müssen sie nicht an demselben Ort auf dem Feld stattgefunden haben. Es kann auch vorgesehen sein, dass ein noch engerer Bereich von Arbeitszyklen genutzt wird, die ausschließlich dieselben geplanten Ereignisse umfassen. In dem eben angeführten Beispiel betrifft dies das Ausbringen von Saatgut (sofern dies das aktuelle geplante Ereignis ist) an derselben Stelle, an der auch das aktuelle geplante Ereignis stattfinden soll. Da zu erwarten ist, dass das Fahrverhalten des Bedieners auch von den lokalen Gegebenheiten auf dem Feld abhängen kann, kann die letzte Variante die Aussagekraft der Vorhersage aufgrund des Fahrverhaltens in vorangegangenen Arbeitszyklen verbessern. Es besteht hier jedoch die Gefahr, dass aufgrund mangelnder Informationen die Voraussage nicht sehr zuverlässig ist.

Alternativ dazu können, um die vorhandene Informationsmenge, anhand derer das Überwachungsmodul lernen und eine Voraussage über das Fahrverhalten des Bedieners treffen kann, zu erhöhen, auch Arbeitszyklen aus wenigstens zwei Kategorien berücksichtigt werden 224. Dazu kann vorgesehen sein, dass das Überwachungsmodul beispielsweise bei der Bestimmung des voraussichtlichen Fahrverhaltens des Bedieners beim Aussäen von Saatgut nicht nur auf Arbeitszyklen zurückgreift, die ein solches Ereignis betreffen sondern auch das Ausbringen von Düngemittel oder das Ausbringen anderer Stoffe auf das Feld, da diese zumindest grob ähnlich dem geplanten Ereignis sind und daher die Arbeitsabfolgen und insbesondere das Fahrverhalten des Bedieners ebenfalls ähnlich sein könnten.

Da das Überwachungsmodul lernfähig ist, können solche Entscheidungen auch abhängig vom aktuellen Fahrverhalten des Bedieners getroffen werden, so dass das Überwachungsmodul bei jedem neuen Arbeitszyklus selbständig entscheidet, ob es nur Informationen aus einer Kategorie mit ähnlichen Ereignissen oder einer Kategorie mit denselben Ereignissen oder aus unterschiedlichen Kategorien, die unterschiedliche Arbeitszyklen und Ereignisse umfassen, auswählt, um das Fahrverhalten des Bedieners vorherzusagen.

Wird Information aus nur einer Kategorie verwendet, so leitet das Überwachungsmodul in einem nächsten Schritt 225 für dieses aktuell geplante Ereignis spezifische Informationen über das Fahrverhalten des Bedieners ab. Darunter fällt beispielsweise das Beschleunigungsverhalten bei Annäherung an den in Fig. 1 dargestellten Bereich 113, woraus sich die verbleibende Zeit bis zum Auftreffen des Arbeitsgeräts auf den Bereich 113 ermitteln lässt und daraus die notwendige Zeit, um in den Stand-by-Zustand zu schalten, was wiederum den Sendezeitpunkt für das Signal an das maschinenspezifische Modul bestimmt. Alternativ können, wenn Informationen aus mehreren Kategorien benutzt wurden, anhand der ausgewerteten Informationen grundsätzlich Informationen über das Fahrverhalten des Bedieners gewonnen werden 226. So kann beispielsweise vom Überwachungsmodul geschlussfolgert werden, dass der Bediener kurz vor Erreichen des geplanten Ereignisses stets abbremst und mit einer bestimmten Geschwindigkeit, beispielsweise 15 km/h weiterfährt. Dies kann bei der Voraussage zum Fahrverhalten des Bedieners für das aktuell geplante Ereignis genutzt werden.

Nachdem das Überwachungsmodul nun auf Grundlage vorangegangener Arbeitszyklen und gegebenenfalls auf Grundlage der aktuellen Informationen, die noch verbleibende Zeit $\Delta t$ bis zum Eintritt des geplanten Ereignisses bestimmt hat 227, sendet das Überwachungsmodul entweder das Signals aus 228, sofern die

verbleibende Zeit $\Delta t$ kleiner oder gleich der Zeit $t_0$ ist, die nötig ist, um in den Stand-by-Zustand zu schalten. Ist die Zeit $\Delta t$ größer als $t_0$, so erfolgt eine erneute Berechnung 229 der noch übrigen Zeit $\Delta t$ (beispielsweise zu einem etwas späteren Zeitpunkt) auf Grundlage aktueller gewonnener geografischer Informationen. Dabei können hier nicht nur die aktuellen geografischen Informationen einfließen, sondern das vorausgesagte Fahrverhalten auch im Lichte der aktuell gewonnenen Informationen neu berechnet werden, was eventuell zu einer Korrektur der Voraussage führt. Die erneute Berechnung wird dabei so häufig durchgeführt/aktualisiert, bis die verbleibende Zeit $\Delta t \leq t_0$ ist. Dann wird das Signal gesendet 228.

Grundsätzlich werden in einem weiteren Schritt 230 sämtliche über das aktuell geplante Ereignis gewonnene Informationen hinsichtlich des Fahrverhaltens des Bedieners gespeichert. Dabei erfolgt diese Speicherung über den gesamten Zeitraum des Arbeitszyklus. Wie bereits weiter oben erwähnt, umfasst dieser Zeitraum nicht nur das geplante Ereignis selbst sondern auch ein gewisses Zeitintervall vorher (beispielsweise zumindest 30 Sekunden oder wenigstens 1 Minute) und kann auch eine gewisse Zeit nach Eintritt des geplanten Ereignisses umfassen. Ebenso kann das Überwachungsmodul beim Auswerten der Informationen Verknüpfungen zu nacheinander geplanten Ereignissen herstellen, um das Fahrverhalten des Bedieners noch genauer zu bestimmen.

Auf Grundlage der bei Durchführung des aktuellen Arbeitszyklus gewonnenen Informationen und der Informationen zu vorangegangenen Arbeitszyklen kann dann eine Neuberechnung des Fahrverhaltens bzw. des voraussichtlichen Fahrverhaltens des Bedieners der Arbeitsmaschine erfolgen, um die Genauigkeit der Voraussage für den nächsten Arbeitszyklus weiter zu verbessern.

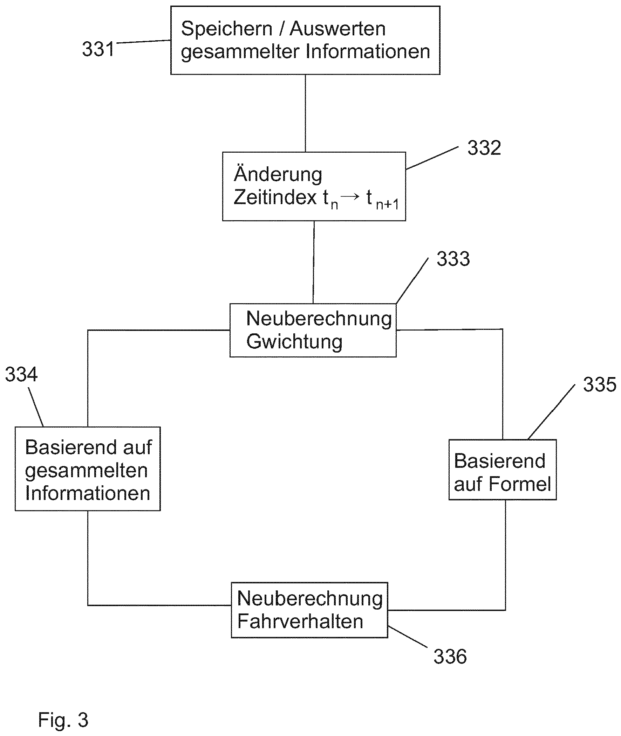

Fig. 3 zeigt eine weitere Ausführungsform des erfindungsgemäßen Verfahrens, das sich beispielsweise an den letzten Schritt 230 des in Fig. 2 beschriebenen Verfahrens anschließen kann. Demgemäß ist der Schritt 331 in Fig. 3 identisch mit dem Schritt 230 in Fig. 2 und umfasst das Speichern und Auswerten der gesammelten Informationen. Wie bereits weiter oben erwähnt, umfasst das Überwachungsmodul einen Speicher oder ist mit einem solchen verbunden, in dem Informationen über vorangegangene Arbeitszyklen abgespeichert werden können. Immer wenn ein neuer Arbeitszyklus durchgeführt wird, werden die während dieses Arbeitszyklus gewonnenen Informationen in dem Speicher abgelegt. Dies führt im Laufe der Zeit zu einer großen Anzahl gesammelter Informationen über vorangegangene Arbeitszyklen. Vorzugsweise werden diese Informationen beispielsweise tabellarisch oder in Form eines Registers in dem Speicher abgelegt, wobei jedem Arbeitszyklus ein Zeitindex $t_n$ zugeordnet wird. Der Zeitindex kann entweder eine natürliche Zahl größer oder wenigstens gleich 0 sein (beispielsweise für das aktuellste Ereignis), oder den Aufnahmezeitpunkt in absoluter Zeit (Datum, Uhrzeit) oder im Zeitabstand zum aktuellsten aufgenommenen Ereignis (Tage, Stunden,....) wiedergeben. Bevorzugt ist eine Ausführung bei der $t_n = n$, also eine natürliche Zahl größer/gleich 0 ist. Wird nun ein neuer Arbeitszyklus in den Speicher aufgenommen (bzw. dessen relevante Informationen), so wird der Zeitindex $t_n$ erhöht auf $t_{n+1}$. Während dies in diesem Schritt 332 zunächst nur geschieht, um ein gewisses Management der gespeicherten Informationen zu ermöglichen, kann dieser Zeitindex auch genutzt werden, um eine Gewichtung der gespeicherten Informationen bei der Berechnung des Fahrverhaltens bzw. Voraussage des Fahrverhaltens mit Hilfe des lernfähigen Überwachungsmoduls zu ermöglichen. So kann in einem weiteren Schritt 333 des Verfahrens nach Abspeicherung der Informationen zu einem neuen Arbeitszyklus, eine Neuberechnung der Gewichtungen der Informationen jedes einzelnen Arbeitszyklus erfolgen.

Diese Gewichtung kann entweder auf einer Formel basieren (335). So kann beispielsweise jedem Arbeitszyklus ein Gewicht in Abhängigkeit von seinem Zeitindex zugeordnet werden. Dazu kann beispielsweise die geometrische Reihe dienen, die über

$$\sum_{n=0}^{\infty} a_0 q^n$$

definiert ist. Als Parameter $a_0$ können je nach vorgesehener maximaler Gewichtung der einzelnen Arbeitszyklen entsprechende Werte verwendet werden. Dabei kann $q$ zwischen 0 und 1 liegen, wobei durch kleinere $q$ erreicht wird, dass zurückliegende Arbeitszyklen schneller "in Vergessenheit geraten" als aktuelle aufgenommene Arbeitszyklen. Dies bedeutet, dass die Gewichtung eines zurückliegenden Arbeitszyklus mit größer werdendem $n$ sehr schnell kleiner wird. Das Überwachungsmodul wird also aktuelle Ereignisse als deutlich wichtiger erachten als weit zurückliegende Ereignisse und vornehmlich aus dem aktuellen und weniger weit zurückliegenden Fahrverhalten des Bedieners lernen. Dies kann besonders dann vorteilhaft sein, wenn das Überwachungsmodul schnell dazulernen soll. Demgegenüber kann durch Wahl von $q$ ungefähr 1 sichergestellt werden, dass das Gedächtnis des lernfähigen Überwachungsmoduls bei der Vorausberechnung des Fahrverhaltens eine große Anzahl auch zurückliegender Arbeitszyklen berücksichtigt. Dies bedeutet, dass für $q$ ungefähr 1 auch deutlich länger zurückliegende Arbeitszyklen immer noch als relevant bei der Berechnung des Fahrverhaltens eingestuft werden. Diese Ausführungsform kann dann vorteilhaft genutzt werden, wenn das Überwachungsmodul schon so viele Informationen gelernt hat, dass es daraus ableiten kann, dass das Fahrverhalten des Bedieners relativ konstant oder zumindest mit angemessener Toleranz vorhersagbar ist. Die Erhöhung der Genauigkeit der Vorhersage kann dann noch besser gelingen, indem noch mehr Informationen, auch länger zurückliegende, berücksichtigt werden. Hier kann dann abhängig von der Menge der bereits zur Verfügung stehenden Informationen eine Anpassung von q durch das Überwachungsmodul erfolgen.

Alternativ dazu oder in Kombination damit kann aber auch basierend auf den gesammelten Informationen der Arbeitszyklen zueinander eine Gewichtung erfolgen 334 bzw. eine Anpassung der Gewichtungen. So kann das lernfähige Überwachungsmodul beispielsweise nach Aufnahme von Informationen zu 20 oder 100 Arbeitszyklen bei jedem neuen Arbeitszyklus evaluieren, ob es Arbeitszyklen in der Vergangenheit gibt, bei denen das Fahrverhalten sehr stark von den übrigen Arbeitszyklen abweicht. Diesen besonderen Arbeitszyklen kann dann weniger Gewicht eingeräumt werden, um eine Verfälschung der Voraussage möglichst zu verhindern, da sie wahrscheinlich nicht den Normalfall des Fahrverhaltens des Bedieners wiederspiegeln und somit nicht repräsentativ sind. Auch hier kann ein geeigneter Algorithmus bereitgestellt werden, der solche starken Abweichungen, beispielsweise basierend auf ihrer relativen Abweichung zu den durchschnittlichen Werten für das Fahrverhalten des Bedieners einstellt.

In jedem Fall wird in einem weiteren Schritt 336 auf Grundlage der neuen Gewichtungen entweder zu Beginn eines neuen geplanten Ereignisses (siehe dazu Fig. 2) oder aber direkt im Anschluss an das Abspeichern der Informationen und die Neuberechnung der Gewichtung das zu erwartende Fahrverhalten des Bedieners neu berechnet.

In einer weiteren vorteilhaften Ausführung kann vorgesehen sein, dass das Überwachungsmodul auch das Fahrverhalten verschiedener Bediener analysieren kann und jedem Bediener ein Profil zuordnet, das er bei Arbeitsbeginn durch Eingabe auf einer Bedieneinheit der Arbeitsmaschine auswählen kann. Es wird so sichergestellt, dass die möglichst effektivste Durchführung der Arbeitszyklen für jeden Bediener gewährleistet wird.

Es sei abschließend erwähnt, dass das vorgestellte Verfahren nicht nur geeignet ist, den Einschaltvorgang bzw. das Überführen der Komponenten der Arbeitsmaschine in den Stand-by-Zustand zu gewährleisten, sondern auch jegliche andere Aufgaben (Beendigung der Ausgabe von Saatgut o.ä.) mit Hilfe des Überwachungsmoduls mit Hinblick auf das Fahrverhalten des Bedieners optimiert werden kann. Die dazu nötigen Verfahrensschritte und Vorrichtungen in der Arbeitsmaschine sind dabei vergleichbar/identisch, wobei nur die geplanten Ereignisse entsprechend angegeben werden müssen. Die vorgestellt Erfindung hat damit auch ein hohes Maß an Flexibilität hinsichtlich ihrer Einsetzbarkeit in der gesamten landwirtschaftlichen Industrie.

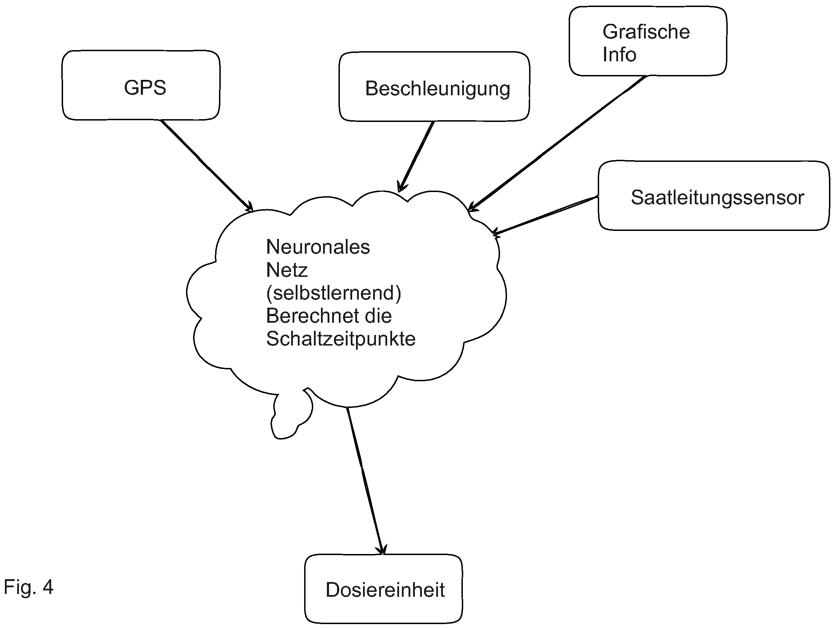

In der Fig. 4 sind die vorbeschriebenen Verfahren in einer anderen Darstellungsweise wieder gegeben.

**Patentansprüche**

1. Elektronisches Maschinen-Management-System zum Einleiten von Schalt- und/oder Stellvorgängen bei landwirtschaftlichen Arbeitsmaschinen (100), umfassend ein Überwachungsmodulund ein maschinenspezifisches Modul, das Komponenten der Arbeitsmaschine (100) steuern kann **dadurch gekennzeichnet, dass** das Überwachungsmodul als lernfähiges Überwachungsmodul ausgebildet ist und Informationen von mehreren Arbeitszyklen der Arbeitsmaschine (100) hinsichtlich des Fahrverhaltens eines Bedieners der Arbeitsmaschine erfasst und auswertet, wobei die Informationen hinsichtlich des Fahrverhaltens wenigstens die Geschwindigkeit der Arbeitsmaschine (100) zu verschiedenen Zeitpunkten und die Beschleunigung der Arbeitsmaschine (100) zu verschiedenen Zeitpunkten umfasst, und in Abhängigkeit der ausgewerteten Informationen vor Eintreten eines geplanten Ereignisses ein für dieses Ereignis indikatives Signal an das maschinenspezifische Modul übertragen kann (228) und wobei das maschinenspezifische Modul in Abhängigkeit von diesem Signal wenigstens eine der Komponenten in einen Stand-by-Zustand versetzen kann.

2. System nach Anspruch 1, **dadurch gekennzeichnet, dass** das System weiterhin ein geographisches Modul umfasst, das geographische Informationen über den Ort der Arbeitsmaschine (100) in Echtzeit ermitteln kann und ein für die geographischen Informationen indikatives Signal an das Überwachungsmodul übertragen kann, wobei das Überwachungsmodul geeignet ist, die geographischen Informationen beim Auswerten der Informationen hinsichtlich des Fahrverhaltens zu verwenden.

3. System nach Anspruch 1 oder 2, **dadurch gekennzeichnet, dass** das Überwachungsmodul ein neuronales Netz umfasst.

4. System nach einem der Ansprüche 1 bis 3, **dadurch gekennzeichnet, dass** das Überwachungsmodul einen Speicher umfasst, in dem das Fahrverhalten eines Bedieners einer Vielzahl von Arbeitszyklen der Arbeitsmaschine gespeichert werden kann.

5. System nach einem der Ansprüche 1 bis 4, **dadurch gekennzeichnet, dass** das Überwachungsmodul Arbeitszyklen in verschiedene Kategorien einordnen kann.

6. System nach Anspruch 5, **dadurch gekennzeichnet, dass** für einen Arbeitszyklus aus einer der Kategorien nur Informationen von Arbeitszyklen aus derselben Kategorie ausgewertet (223) oder Informationen aus wenigstens einer weiteren Kategorie (224) ausgewertet werden können.

7. System nach einem der Ansprüche 1 bis 6, **dadurch gekennzeichnet, dass** das System in Abhängigkeit von gewichteten Informationen über den aktuellen Betriebszustand und den ausgewerteten Informationen das für das Ereignis indikative Signal an das maschinenspezifische Modul übermitteln kann.

8. Verfahren zum Einleiten von Schalt- und/oder Stellvorgängen bei landwirtschaftlichen Arbeitsmaschinen (100), wobei Informationen von mehreren Arbeitszyklen einer Arbeitsmaschine (100) hinsichtlich des Fahrverhaltens eines Bedieners erfasst und ausgewertet werden, wobei die Informationen hinsichtlich des Fahrverhaltens wenigstens die Geschwindigkeit der Arbeitsmaschine (100) zu verschiedenen Zeitpunkten und die Beschleunigung der Arbeitsmaschine (100) zu verschiedenen Zeitpunkten umfassen, und in Abhängigkeit der ausgewerteten Informationen vor Eintritt eines geplanten Ereignisses ein für dieses Ereignis indikatives Signal an ein maschinenspezifisches Modul übermittelt wird (228), das in Abhängigkeit dieses Signals wenigstens eine der Komponenten der Arbeitsmaschine (100) in einen Stand-by-Zustand versetzt.

9. Verfahren nach Anspruch 8, **dadurch gekennzeichnet, dass** die Arbeitszyklen ein ähnliches geplantes Ereignis beinhaltet haben.

10. Verfahren nach Anspruch 8 oder 9, **dadurch gekennzeichnet, dass** aus den ausgewerteten Informationen und Informationen über den aktuellen Arbeitszyklus ein wahrscheinlichstes Fahrverhalten abgeleitet wird und das indikative Signal in Abhängigkeit dieses wahrscheinlichsten Fahrverhaltens ein Zeitintervall vor Eintreten des geplanten Ereignisses übermittelt wird.

11. Verfahren nach einem der Ansprüche 8 bis 10, **dadurch gekennzeichnet, dass** die Arbeitszyklen in verschiedene Kategorien eingeteilt werden.

12. Verfahren nach Anspruch 11, **dadurch gekennzeichnet, dass** jedes geplante Ereignis in eine der Kategorien eingeordnet wird und Informationen nur aus dieser Kategorie ausgewertet werden (223) oder Informationen aus dieser Kategorie und wenigstens einer weiteren Kategorie (224) ausgewertet werden.

13. Verfahren nach einem der Ansprüche 8 bis 12, **dadurch gekennzeichnet, dass** bei der Auswertung der Informationen eine Gewichtung der Informationen in Abhängigkeit von der Zeit erfolgt (335)

## Claims

1. Electronic machine management system for initiating switching and/or adjusting operations in agricultural work machines (100), comprising a monitoring module and a machine-specific module which can control components of the work machine (100), **characterized in that** the monitoring module is in the form of a monitoring module capable of learning and captures and evaluates information from a plurality of work cycles of the work machine (100) with regard to the driving behaviour of an operator of the work machine, wherein the information with regard to the driving behaviour comprises at least the speed of the work machine (100) at different times and the acceleration of the work machine (100) at different times, and, on the basis of the evaluated information and before the occurrence of a planned event, can transmit (228) a signal indicative of this event to the machine-specific module, and wherein the machine-specific module can change at least one of the components to a standby state on the basis of this signal.

2. System according to Claim 1, **characterized in that** the system also comprises a geographical module which can determine geographical information relating to the location of the work machine (100) in real time and can transmit a signal indicative of the geographical information to the monitoring module, wherein the monitoring module is suitable for using the geographical information when evaluating the information with regard to the driving behaviour.

3. System according to Claim 1 or 2, **characterized in that** the monitoring module comprises a neural network.

4. System according to one of Claims 1 to 3, **characterized in that** the monitoring module comprises a memory which can store the driving behaviour of an operator for a multiplicity of work cycles of the work machine.

5. System according to one of Claims 1 to 4, **characterized in that** the monitoring module can classify work cycles in different categories.

6. System according to Claim 5, **characterized in that**, for a work cycle from one of the categories, only information from work cycles from the same category (223) can be evaluated or information from at least one further category (224) can be evaluated.

7. System according to one of Claims 1 to 6, **characterized in that** the system can transmit the signal indicative of the event to the machine-specific module on the basis of weighted information relating to the current operating state and the evaluated information.

8. Method for initiating switching and/or adjusting operations in agricultural work machines (100), wherein information from a plurality of work cycles of a work machine (100) are captured and evaluated with regard to the driving behaviour of an operator, wherein the information with regard to the driving behaviour comprises at least the speed of the work machine (100) at different times and the acceleration of the work machine (100) at different times, and, on the basis of the evaluated information and before the occurrence of a planned event, a signal indicative of this event is transmitted (228) to a machine-specific module which changes at least one of the components of the work machine (100) to a standby state on the basis of this signal.

9. Method according to Claim 8, **characterized in that** the work cycles include a similar planned event.

10. Method according to Claim 8 or 9, **characterized in that** a most probable driving behaviour is derived from the evaluated information and information relating to the current work cycle, and the indicative signal is transmitted an interval of time before the occurrence of the planned event on the basis of this most probable driving behaviour.

11. Method according to one of Claims 8 to 10, **characterized in that** the work cycles are divided into different categories.

12. Method according to Claim 11, **characterized in that** each planned event is classified in one of the categories and information only from this category (223) is evaluated or information from this category and from at least one further category (224) is evaluated.

13. Method according to one of Claims 8 to 12, **characterized in that** the information is weighted (335) on the basis of the time when evaluating the information.

**Revendications**

1. Système de gestion de machine électronique destiné à initier des opérations de commutation et/ou de réglage sur des machines de travail agricoles (100), comprenant un module de surveillance un module spécifique à la machine, lequel peut commander des composants de la machine de travail (100), **caractérisé en ce que** le module de surveillance est réalisé sous la forme d'un module de surveillance ayant une capacité d'apprentissage et il acquiert et interprète des informations de plusieurs cycles de travail de la machine de travail (100) qui concernent le comportement de conduite d'un opérateur de la machine de travail, les informations qui concernent le comportement de conduite comprenant au moins la vitesse de la machine de travail (100) à différents instants et l'accélération de la machine de travail (100) à différents instants, et il peut transmettre (228) un signal indicateur d'un événement prévu au module spécifique à la machine en fonction des informations interprétées avant que cet événement se produise et le module spécifique à la machine, en fonction de ce signal, peut amener au moins l'un des composants dans un état de veille.

2. Système selon la revendication 1, **caractérisé en ce que** le système comprend en outre un module géographique qui peut déterminer en temps réel des informations géographiques à propos de l'emplacement de la machine de travail (100) et peut transmettre au module de surveillance un signal indicateur des informations géographiques, le module de surveillance étant adapté pour utiliser les informations géographiques lors de l'interprétation des informations qui concernent le comportement de conduite.

3. Système selon la revendication 1 ou 2, **caractérisé en ce que** le module de surveillance comprend un réseau neuronal.

4. Système selon l'une des revendications 1 à 3, **caractérisé en ce que** le module de surveillance comprend une mémoire dans laquelle peut être enregistré le comportement de conduite d'un opérateur d'une pluralité de cycles de travail de la machine de travail.

5. Système selon l'une des revendications 1 à 4, **caractérisé en ce que** le module de surveillance peut classer les cycles de travail en différentes catégories.

6. Système selon la revendication 5, **caractérisé en ce que** pendant un cycle de travail de l'une des catégories, seules peuvent être interprétées (223) des informations issues de cycles de travail de la même catégorie ou des informations issues d'au moins une catégorie supplémentaire (224).

7. Système selon l'une des revendications 1 à 6, **caractérisé en ce que** le système peut communiquer le signal indicateur de l'événement au module spécifique à la machine en fonction d'informations pondérées à propos de l'état opérationnel actuel et des informations interprétées.

8. Procédé pour initier des opérations de commutation et/ou de réglage sur des machines de travail agricoles (100), des informations de plusieurs cycles de travail de la machine de travail (100) qui concernent le comportement de conduite d'un opérateur étant acquises et interprétées, les informations qui concernent le comportement de conduite comprenant au moins la vitesse de la machine de travail (100) à différents instants et l'accélération de la machine de travail (100) à différents instants, et un signal indicateur d'un événement prévu étant communiqué au module spécifique à la machine (228) en fonction des informations interprétées avant que cet événement se produise, lequel amène au moins l'un des composants de la machine de travail (100) dans un état de veille en fonction de ce signal.

9. Procédé selon la revendication 8, **caractérisé en ce que** les cycles de travail peuvent contenir un événement prévu similaire.

10. Procédé selon la revendication 8 ou 9, **caractérisé en ce qu'**un comportement de conduite le plus probable est dérivé des informations interprétées et des informations à propos du cycle de travail actuel et le signal indicateur est communiqué en fonction de ce comportement de conduite le plus probable un intervalle de temps avant que l'événement prévu se produise.

11. Procédé selon l'une des revendications 8 à 10, **caractérisé en ce que** les cycles de travail sont classés en différentes catégories.

12. Procédé selon la revendication 11, **caractérisé en ce que** chaque événement prévu est classé dans l'une des catégories et seules sont interprétées (223) des informations issues de cette catégorie ou des informations issues de cette catégorie et d'au moins une catégorie supplémentaire (224).

13. Procédé selon l'une des revendications 8 à 12, **caractérisé en ce qu'**une pondération des informations en fonction du temps est effectuée (335) lors de l'interprétation des informations.

Fig. 1

EP 2 944 174 B1

220 — Bestimmen des geplanten Ereignisses

221 — permanente Bestimmung geographischer Informationen

222 — Abfragen vorheriger Arbeitszyklen

223 — aus einer Kategorie

224 — aus wenigstens 2 Kategorien

ableiten spezifischer Informationen über Fahrverhalten

Ableiten allgemeiner Informationen über Fahrverhaltern

225

226

227 — Vorraussagen Δt bis geplantes Ereignis

$\Delta t \leq to$

$\Delta t \geq to$

228 — Signal senden

erneute Berechnung mit aktuellen geographischen Informationen

229

230 — Speichern/Auswerten gesammelter Informationen

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1692928 A2
- EP 2253187 B1